# EUROPEAN PATENT APPLICATION

(11) **EP 1 777 996 A1**
(43) Date of publication of application: **25.04.2007**
(21) Application number: 06020118.3
(22) Date of filing: 26.09.2006
(51) Int. Cl.: H05H 1/26, B23K 10/00, B23K 7/00, B23K 9/32, F16K 31/06

(54) **Torch for processing metal with an electromagnetic valve mechanism integrated in the torch**

(30) Priority: 19.10.2005 JP 2005304101
(71) Applicant: KOIKE SANSO KOGYO CO., LTD, Edogawa-ku, Tokyo (JP)
(72) Inventor: Koike, Tetsuo Koike Sanso Kogyo Co., Ltd., Edogawa-ku Tokyo (JP); Furujo, Akira Koike Sanso Kogyo Co., Ltd., Edogawa-ku Tokyo (JP); Mizuno, Seiji Koike Sanso Kogyo Co., Ltd., Edogawa-ku Tokyo (JP)
(74) Representative: Patentanwälte Westphal, Mussgnug & Partner

(57) **Abstract**

The present invention regards to torch for processing metal, the torch comprising an electromagnetic valve mechanism (B) which includes a base (11) which has a vertically piercing gas through hole (11b); a core (12) which is attached to a nozzle (17) side of the base (11), the core (12) having a gas passage piercing (12e) along an axis which coincides with a axis (11a) of the gas through hole (11b) made in the base (11), a connection portion which connects a gas supply passage (16) being formed in the core (12), the gas supply passage (16) supplying gas to a side opposite the nozzle of the gas passage; a plunger (13) which is slidably arranged in the gas passage (12c) formed in the core (12); a biasing member (14) which biases the plunger (13) to shut off the nozzle (17) formed in the base (11); and a coil (15) which is fitted in the core (11), the coil (15) driving the plunger (14) to separate the plunger (14) from the nozzle (17) formed in the base (11).

## Description

### BACKGROUND OF THE INVENTION

### 1. Field of the Invention

The present invention relates to a torch such as a plasma torch and a gas torch which perform intended machining by injecting supplied gas to a machined material from a burner or a nozzle attached to a leading end.

### 2. Description of the Related Art

In the plasma torch, the gas is supplied to a space formed by an electrode and the nozzle, and plasma jet in which plasma is formed by an electric discharge between the electrode and the nozzle is injected from the nozzle toward a material to be machined, which enables machining such as cutting and welding to be performed. In the gas torch, fuel gas and preheating oxygen are supplied to the burner attached to the leading end, and the material to be machined is heated and welded by a burned flame, or the material to be machined is cut by injecting cutting oxygen to a heated region of the material.

Such torches are used while mounted on a manually operated small travel cart or an automatically controlled large travel cart. In the case where the torch is mounted on the manually operated travel cart, the supply of the gas to the torch and the shutoff of the gas to the torch are manually operated. In the case where the torch is mounted on the automatically controlled travel cart, the gas supply and the gas shutoff are performed by the control of an electromagnetic valve arranged in a frame.

Particularly, in the case where the torch which is of the gas cutting torch or the plasma cutting torch is mounted on a numerical control (NC) cutting apparatus having the frame which travels along a rail, generally the cutting torch is mounted on a carriage arranged in the frame while being movable in a crosswise direction, the electromagnetic valve which controls the supply of the gas to the cutting torch is fixed to the frame or the carriage, and the cutting torch and the electromagnetic valve are connected with a hose.

In the conventional cutting apparatus, a space having an inner diameter of the hose, an inner diameter of a gas passage of the torch, and a length in which the inner diameters are added is formed on a downstream side of the electromagnetic valve, so that it takes a long time for the gas to reach the burner or nozzle provided at the leading end of the torch through the space after the electromagnetic valve is opened. Therefore, timing at which the electromagnetic valve is opened and closed is set in consideration of the length of the hose.

Thus, in the case of the long distance between the torch and the electromagnetic valve, it is necessary to provide a time difference between a time point when the gas should actually be injected from the torch and a time point when the electromagnetic valve should be opened, which results in a problem that setting of control timing of the electromagnetic valve becomes complicated.

In the case where the torch is the plasma cutting torch, the electrode attached to the plasma cutting torch is consumed in each time when a plasma arc is formed. Particularly, a degree of consumption is increased, in the case where the supply of the oxidizing gas to the surroundings of the electrode is continued in the stopping the energization through the electrode to extinguish the plasma arc. Furthermore, when a volume of the gas passage from the electromagnetic valve to the electrode is large, it takes a long time for pressure in the gas passage to be decreased to atmospheric pressure, which results in a problem that the supply of the oxidizing gas is continued for the surroundings of the electrode.

In order to solve the above problems, it is preferable to directly attach the electromagnetic valve to the torch. However, in the conventional electromagnetic valve, because a gas flow direction is orthogonal to a direction inwhich a function of controlling the gas flow and shutoff is installed, there is a problem that the electromagnetic valve cannot directly be attached to the torch.

In view of the foregoing, an object of the invention is to provide a torch in which an electromagnetic valve mechanism is attached to a gas supply system.

### SUMMARY OF THE INVENTION

In order to achieve the above described problem, according to the present invention, there is provided a torch which performs intended machining by injecting supplied gas to a machined material from a leading end, the torch comprising an electromagnetic valve mechanism which includes: a base which has a vertically piercing gas through hole, a connection portion connected to a gas passage on a torch nozzle side being formed on one side of the gas through hole and a nozzle being formed on the other side in the base; a core which is attached to a nozzle side of the base, the core having a gas passage piercing along an axis which coincides with a axis of the gas through hole made in the base, a connection portion which connects a gas supply passage being formed in the core, the gas supply passage supplying gas to a side opposite the nozzle of the gas passage; a plunger which is slidably arranged in the gas passage formed in the core; a biasing member which biases the plunger to shut off the nozzle formed in the base; and a coil which is fitted in the core, the coil driving the plunger to separate the plunger from the nozzle formed in the base.

In a torch according to one aspect of the invention, a base is connected to a gas connection portion provided in a torch body, a plunger is slidably arranged in the base, and a core fitted in a coil is connected to an outer periphery of the base. Therefore, the gas passage piercing through the base and the core can be formed to configure the torch in which a projection projected from the gas passage toward the orthogonal direction is eliminated to form an electromagnetic valve mechanism.

Accordingly, in the torch of the invention, when the gas is injected or shut off from the burner or the nozzle in association with opening and closing of the electromagnetic valve mechanism, a response time can be shortened by providing the electromagnetic valve mechanism in the torch body. Therefore, the gas injection timing for the material to be machined and the control timing for the electromagnetic valve mechanism are easy to set.

Particularly, in the case where the torch is the plasma cutting torch, the amount of oxidizing gas flowing around the electrode and the period in which the oxidizing gas flows can be decreased after the gas shutoff operation, so that the timing is easily adjusted between oxidizing gas flow and the stop of the energization through the electrode. Therefore the consumption of the electrode can be reduced.

Furthermore, because the volume of the gas passage between the electromagnetic valve mechanism and the burner or nozzle is decreased, when the gas flow is shut off after the machining, the amount of gas exhausted wastefully into the atmosphere can be decreased to reduce cost.

### BRIEF DESCRIPTION OF THE DRAWINGS

Fig. 1 is a view showing a configuration of a torch according to an embodiment of the invention;

Fig. 2 is a sectional view showing a configuration of an electromagnetic valve mechanism connected to a gas connection portion of a torch;

Fig. 3 is a view showing a configuration of a base; and

Fig. 4 is a view showing a configuration of a core.

### DESCRIPTION OF THE PREFERRED EMBODIMENT

A preferred embodiment of the invention will be described below. In a torch according to an embodiment of the invention, an electromagnetic valve mechanism including a base, a core, a plunger, and a coil is directly connected to a gas connection portion provided in a torch body and a volume of a gas passage is decreased on a downstream side of the electromagnetic valve mechanism. Therefore, gas injection and a shutoff response time can be shortened for control of the electromagnetic valve mechanism.

In the invention, any torch may be used as long as the torch is used to perform the intended work by receiving gas supply, and any supply gas may be used. Examples of the torch include a gas welding torch, a gas cutting torch, a plasma welding torch, and a plasma cutting torch. In the gas welding torch, the flame is formed by supplying the fuel gas or the self-sustained combustion gas to the welding burner attached to the leading end of the torch body, and the material to be machined is melted and welded by the flame. In the gas cutting torch, the fuel gas or self-sustained combustion gas and the cutting oxygen are supplied to the welding burner attached to the leading end of the torch, the material to be machined is preheated by the flame in which the fuel gas and the self-sustained combustion gas are burned, and then the cutting is performed by injecting the cutting oxygen. In the plasma cutting torch, nitrogen is supplied to the surroundings of the electrode attached to the torch body, the plasma arc is formed by the energization between the electrode and the nozzle and between the electrode and the material to be machined, and the machined material is melted and welted by the plasma arc. In the plasma cutting torch, oxygen is supplied to the surroundings of the electrode or to the plasma welding torch which melts and welds the material to be machined with the plasma arc, and the oxygen plasma is formed and injected toward the material to be machined from the nozzle to cut the material to be machined.

The invention can be applied to any torch. Examples of the gas which becomes a target include the fuel gas, the self-sustained combustion gas, and the cutting oxygen in the gas welding torch and the gas cutting torch, the plasma gas such as nitrogen, oxygen, and air in the plasma welding torch and the plasma cutting torch, and a shielding gas such as oxygen and air which constitutes a secondary gas flow or a tertiary gas flow supplied to the surroundings of the plasma arc. The torch of the invention can be configured in all the connection portions or the selected connection portion of the fuel gas, the self-sustained combustion gas, and the cutting oxygen in the gas welding torch and the gas cutting torch. The torch of the invention can also be configured in all the connection portions or the selected connection portion of the plasma gas in the plasma welding torch and the plasma cutting torch. The torch of the invention can also be configured in all the connection portions or the selected connection portion of the shielding gas.

In the electromagnetic valve mechanism connected to the gas connection portion of the torch, the substantially linear gas passage is configured by forming the gas passage while piercing through the base and the core attached to the base, the nozzle and the plunger which blocks and opens the nozzle are arranged in the substantially linear gas passage, and the coil which separates the plunger from the nozzle is attached to the outer periphery of the core. Therefore, the projection projected from the gas passage toward the orthogonal direction is eliminated to perform the shutoff and flow of the gas.

Accordingly, in the torch of the invention, the flow and shutoff of the gas can be controlled by the shape having an extent in which the hose or a part of the piping is slightly enlarged, and the whole volume of the piping system is not increased. Therefore, the response time of the gas injection can be shortened by the simple structure without increasing the gas supply side in the torch.

### (Embodiment)

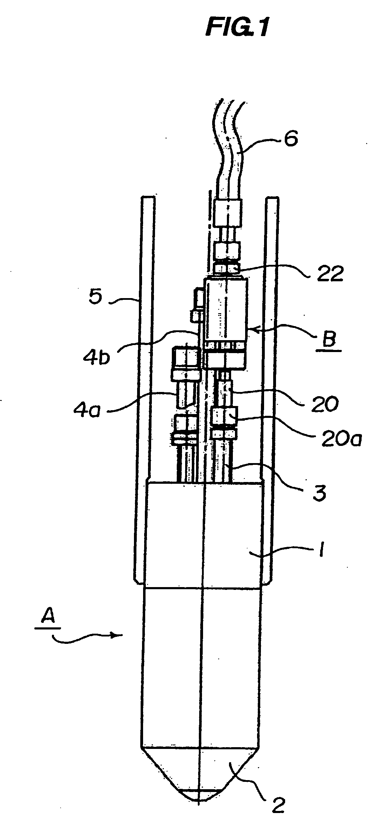

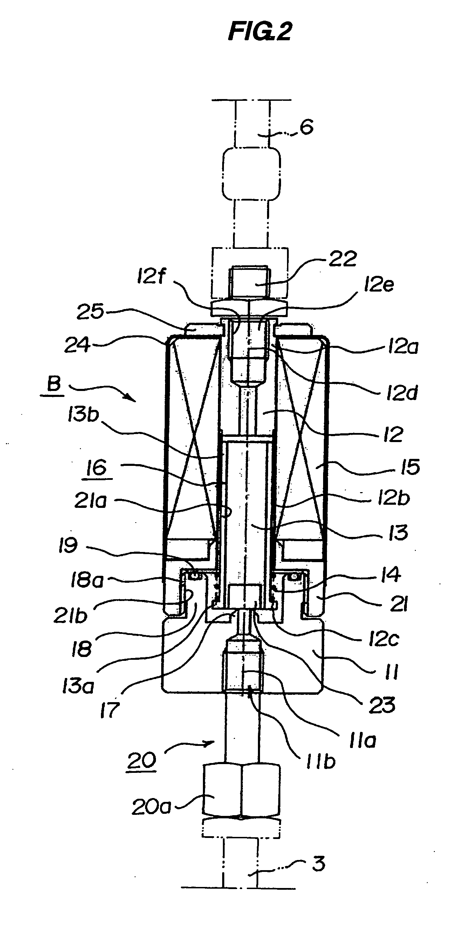

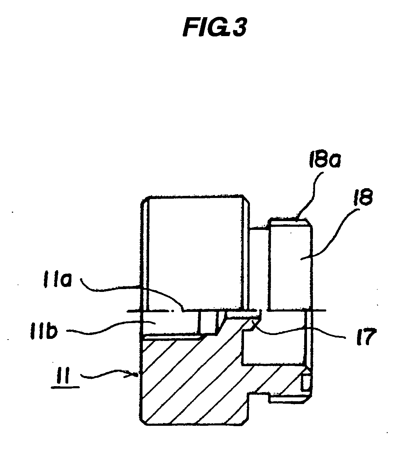

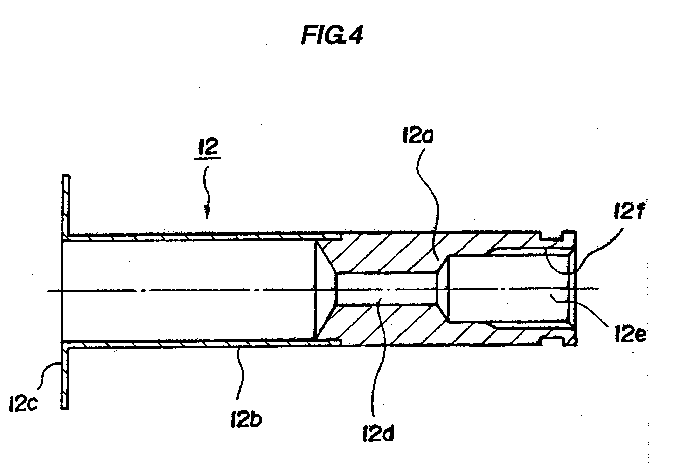

A configuration of the electromagnetic valve mechanism of the embodiment will be described below with reference to the accompanying drawings. Fig. 1 is a view showing a configuration of the torch, Fig. 2 is a sectional view showing a configuration of the electromagnetic valve mechanism connected to the gas connection portion of the torch, Fig. 3 is a view showing a configuration of the base, and Fig. 4 is a view showing a configuration of the core.

A torch A shown in Fig. 1 is formed as a plasma cutting torch. In the plasma cutting torch, a torch nozzle 2 which injects the plasma arc is detachably attached to a leading end of a torch body 1, and an electrode (not shown) is detachably attached to the inside of the torch nozzle 2. A gas passage 3 and cooling water connection portions 4a and 4b are provided at an upper end of the torch body 1. The gas passage 3 supplies the plasma gas to the surroundings of the electrode. The cooling water connection portions 4a and 4b supplies and discharges cooling water which cools the electrode and the torch nozzle 2. Furthermore, the upper end side of the torch body 1 is configured to be connected to a cable (not shown) which energizes through the electrode and to a cable (not shown) which energizes through the torch nozzle 2.

An electromagnetic valve mechanism B is formed in the gas passage 3 provided in an upper end portion of the torch body 1 constituting the torch A. The electromagnetic valve mechanism B is protected by a torch cover 5 provided on the upper end side of the torch body 1. A hose 6 which is of a gas supply passage is connected to the electromagnetic valve mechanism B, the plasma gas can be supplied to the surroundings of the electrode attached to the torch A by connecting the hose 6 to a supply source (not shown) of the plasma gas.

Then, a configuration of the electromagnetic valve mechanism B will be described with reference to Figs. 2 to 4. The electromagnetic valve mechanism B includes a base 11, a core 12 attached to the base 11, a plunger 13 arranged in the core 12, a biasing member 14 biasing the plunger 13, and a coil 15 attracting the plunger 13. A passage 16 is formed so as to pierce through the base 11 and the core 12.

A through hole 11b is made so as to coincide with a center axis 11a of the base 11, and the through hole 11b pierces through the base 11 to constitute a part of the passage 16. A nozzle 17 and a ring projection 18 are formed in a surface on one side (surface on the upper side in Fig. 2) of the base 11. The nozzle 17 coincides with the center axis 11a and the through hole 11b. The ring projection 18 is coaxial with the nozzle 17, and the ring projection 18 is located higher than the nozzle 17. A screw portion 18a is formed in an outer peripheral surface of the projection 18. A ring groove is formed in an end face of the projection 18, and an O-ring 19is fitted in the ring groove.

A screw portion 11c is formed in a surface on the side opposite the nozzle 17 of the through hole 11b made in the base 11, and the screw portion 11c becomes a connection portion which is connected to the gas passage 3 provided in the torch body 1. A joint 20 having a cap nut 20a is connected to the screw portion 11c. The base 11 is connected to the gas passage 3 of the torch body 1 by coupling the cap nut 20a of the joint 20 to the gas passage 3.

The plunger 13 is arranged in the core 12, and a nut member 21 fixes the plunger 13 to the projection 18 formed in the base 11 by a nut member 21. The plunger 13 and an internal space of the projection 18 constitute a part of the passage 16. The outer periphery of the plunger 13 is fitted in the coil 15. The plunger 13 arranged in the coil 15 is slid by the energization through the coil 15 to attract the plunger 13, which separates the plunger 13 from the nozzle 17.

Therefore, the core 12 includes a core body 12a and a sleeve 12b in which a flange 12c is formed in an end portion integrally attached to the core body 12a. A through hole 12e piercing through the core body 12a is made in the core 12, and the through hole 12e coincides with a center axis 12d of the core 12. Accordingly, the internal space of the sleeve 12b and the through hole 12e of the core body 12a are continuously formed while coinciding with the center axis 12d of the core 12, and the spaces constitute a part of the passage 16.

The flange 12c provided in the end portion of the sleeve 12b has an outer diameter which is larger than a diameter of the O-ring 19, attached to an end face of the projection 18 formed in the base 11, while being smaller than an outer diameter of the projection 18.

A screw portion 12f is formed in a surface on the side opposite the sleeve 12b of the through hole 12e made in the core body 12a, and the screw portion 12f becomes a connection portion which is connected to the hose 6 connected to a plasma-gas supply source (not shown). A terminal 22 is connected to a screw portion 12f, and the plasma-gas supply source and the torch A are connected by coupling the hose 6 to the terminal 22.

The nut member 21 has a function of fixing the core 12 to the base 11. Therefore, a hole 21a into which the core 12 is fitted is made in the center of the nut member 21, and a thread 21b which engages the screw 18a of the projection 18 formed in the base 11 is formed in an inner peripheral surface.

The plunger 13 is arranged in the sleeve 12b of the core 12 while being slidable along the center axis 12d, and the plunger 13 is biased to block the nozzle 17 by a spring 14 which is of the biasing member. The plunger 13 is also separated from the nozzle 17 to form the passage 16 in association with the energization through the coil 15 by communicating the through hole 11b piercing through the base 11, the space formed in the sleeve 12b, and the through hole 12e formed in the core body 12a.

Therefore, the plunger 13 has a length slightly shorter than a distance between the nozzle 17 and the end face on the side of the sleeve 12b of the core body 12a constituting the core 12, and the plunger 13 has an outer diameter substantially equal to an inner diameter of the sleeve 12b. A seat 23 is provided in a region where the plunger 13 abuts on the nozzle 17, a flange 13a engaging the spring 14 is formed in the end portion on the side in which the seat 23 is provided, and a slit 13b constituting a part of the passage 16 is formed over the entire length in the lengthwise direction of the outer periphery.

A hole in which the core 12 is fitted is made in the center of the coil 15, a cover 24 is attached to the coil 12 while the core 12 is fitted, and the coil 15 is fixed to the core 12 using a snap ring 25. The coil 15 is configured to be able to attract the plunger 13 when the energization is performed through the coil 15 from a control unit (not shown).

In the embodiment, the outer diameters of the base 11 and cover 24 are set about 20 mm. The outer diameters of the base 11 and cover 24 are not particularly larger than the outer diameter (about 18 mm) of the hose 6, but the base 11 and cover 24 can be stored and protected in the internal space of the torch cover 5.

The passage 1 6 is formed while piercing in the lengthwise directions of the base 11 and core 12, and the core 12 and the plunger 13 are formed in the direction along the passage 16, so that noprojectionprojected toward the direction intersecting the passage 16 exists when viewed based on the passage 16. Therefore, the function of controlling the gas shutoff and flow can be exerted by slightly enlarging a part of a piping system.

In the electromagnetic valve mechanism B having the above configuration, normally the plunger 13 is biased by the spring 14 and pressed against the nozzle 17 to close the through hole 11b of the base 11. Accordingly, the through hole 11b, the internal space of the core 12, and the through hole 12e which constitute the passage 16 are not communicated but shut off to block the plasma gas flow. When the energization is performed through the coil 15, the plunger 13 is attracted and separated from the nozzle 17, and the through hole 11b of the base 11, the internal space of the core 12, and the through hole 12e are communicated to form the passage 16. This enables the plasma gas to flow.

Accordingly, in the torch A to which the electromagnetic valve mechanism B is connected by coupling the joint 20 to the gas passage 3 of the torch body 11, the terminal 22 is connected to the screw portion 12f of the core 12, the hose 6 is connected to the terminal 22, and the hose 6 is connected to the plasma-gas supply source (not shown) to start the plasma gas supply. Therefore, when the energization is not performed through the coil 15, although the plasma gas supplied from the side of the core body 12b reaches the internal space of the projection 18 of the base 11 through the inside of the core 12, the plasma gas is not supplied to the torch A and the shutoff state is maintained.

When the energization is performed through the coil 15, the plunger 13 is separated away from the nozzle 17 to form the continuous passage 16 from the core 12 to the base 11, and the plasma gas supplied from the side of the core 12 is supplied to the torch A from the base 11 through the gas passage 3.

As described above, the gas passage 16 of the electromagnetic valve mechanism B, the hose 6 which is of the gas supply passage, and the gas passage 3 are arranged in line, so that the gas can smoothly be supplied to the torch nozzle with good response.

In the torch A having the above configuration, the particular projection portion is eliminated by slightly enlarging a part of the piping system, which allows supply and shutoff of the gas to be controlled. Therefore, the volume of the piping system can advantageously be decreased to achieve the miniaturization.

Particularly, in the case where the torch A is the plasma torch, the plasma gas supply piping having the configuration of the invention enables the volume of the gas passage to be extremely decreased between the electromagnetic valve mechanism B and the electrode, the time difference between the energization through the coil 15 and the timing at which the plasma gas flow to the surroundings of the electrode is increased or decreased can advantageously be shortened to easily perform the machining control.

## Claims

1. A torch which performs intended machining by injecting supplied gas to a machined material from a leading end, the torch comprising an electromagnetic valve mechanism which includes:
a base which has a vertically piercing gas through hole, a connection portion connected to a gas passage on a torch nozzle side being formed on one side of the gas through hole and a nozzle being formed on the other side in the base;
a core which is attached to a nozzle side of the base, the core having a gas passage piercing along an axis which coincides with a axis of the gas through hole made in the base, a connection portion which connects a gas supply passage being formed in the core, the gas supply passage supplying gas to a side opposite the nozzle of the gas passage;
a plunger which is slidably arranged in the gas passage formed in the core;
a biasing member which biases the plunger to shut off the nozzle formed in the base; and
a coil which is fitted in the core, the coil driving the plunger to separate the plunger from the nozzle formed in the base.

2. A torch according to claim 1, wherein the gas passage of the electromagnetic valve mechanism is arranged in line along with both the gas supply passage arranged on an upstream side of the gas passage and a gas passage arranged on a downstream side of the gas passage.
